# FASCICULE DE BREVET EUROPEEN

(11) **EP 3 721 760 B1**
(45) Date de publication et mention de la délivrance du brevet: **17.11.2021**
(21) Numéro de dépôt: 20169044.3
(22) Date de dépôt: 09.04.2020
(51) Int. Cl.: A47J 37/06

(54) **APPAREIL DE CUISSON À AIR CHAUD AVEC UNE OUVERTURE FRONTALE POUR L'INSERTION ET LE RETRAIT D'UN RÉCIPIENT DE CUISSON**
HEISSLUFTKOCHGERÄT MIT VORDERER ÖFFNUNG ZUM EINSETZEN UND ENTFERNEN EINES KOCHBEHÄLTERS
HOT AIR COOKING APPARATUS WITH A FRONT OPENING FOR INSERTING AND REMOVING A COOKING DEVICE

(30) Priorité: 11.04.2019 FR 1903861
(43) Date de publication de la demande: 14.10.2020
(73) Titulaire: SEB S.A., 69130 Ecully (FR)
(72) Inventeur: DUMOUX, Philippe, 21120 GEMEAUX (FR); PRIETO, Guillaume, 21380 MARSANNAY LE BOIS (FR); BAILLY, Adrien, 69100 VILLEURBANNE (FR)
(74) Mandataire: SEB Développement

(56) Documents cités:
- EP-A1- 3 210 507
- CN-U- 203 195 501
- FR-A1- 2 982 755
- US-A1- 2013 180 413
- US-A1- 2016 150 915

## Description

### Domaine technique

La présente invention concerne les appareils de cuisson à air chaud qui permettent de réaliser une cuisson des aliments au moyen d'une circulation d'air chaud, ladite cuisson étant réalisée en utilisant très peu d'huile, voire pas du tout d'huile.

### Etat de la technique

Les appareils de cuisson à air chaud du type de ceux décrits dans les documents US 2013/0180413 A1 ou EP3210507A1 sont bien connus de l'homme du métier, ceux-ci étant généralement dénommés « friteuse à air chaud ». Un tel appareil de cuisson permet de réduire fortement la quantité de matière grasse, voire de la supprimer complètement, lors de la cuisson des aliments qui s'effectue simplement grâce à de l'air chaud qui circule dans une enceinte de cuisson contenant les aliments à cuire. Ainsi, il est possible de consommer des aliments plus diététiques, ces aliments pouvant être d'origine végétale ou animale, par exemple des frites, des légumes, de la viande ou du poisson.

Un appareil de cuisson à air chaud comprend généralement une embase fermée qui incorpore une cuve amovible, ladite cuve permettant la réception des aliments à cuire, soit directement soit en disposant ces aliments à cuire dans un panier amovible lui-même positionné dans la cuve. Une fois les aliments disposés dans la cuve et celle-ci placée dans l'embase, l'appareil de cuisson est fermé pour constituer une enceinte de cuisson incorporant la cuve, l'éventuel panier et les aliments. De l'air chaud circule ensuite dans cette enceinte de cuisson au moyen d'un bloc de chauffe disposé en partie supérieure de l'appareil de cuisson, au-dessus de l'embase, la circulation de l'air chaud permettant de réaliser la cuisson des aliments placés dans la cuve. Le bloc de chauffe comporte un dispositif de chauffe et un dispositif de circulation d'air permettant d'assurer la circulation de l'air chauffé dans l'enceinte de cuisson.

Lorsque la cuisson des aliments est terminée, l'appareil est ouvert et la cuve extraite de l'embase, les aliments cuits étant ensuite transvidés dans un plat de service qui est alors posé sur la table au moment du repas. Ainsi, les appareils de cuisson traditionnels nécessitent une étape de transfert des aliments cuits de la cuve ou du panier éventuellement incorporé dans cette cuve, vers le plat de service qui est posé sur la table au moment du repas. Ce transfert des aliments cuits dans un plat de service - qui est généralement froid - engendre le refroidissement des aliments cuits avant leur consommation. Il est par ailleurs nécessaire de laver ce plat de service après son utilisation, en plus de la cuve et éventuellement du panier de l'appareil de cuisson.

Le document US 2016/015 0915 A1 divulgue un appareil de cuisson comprenant un logement présentant une ouverture frontale pour recevoir un récipient de cuisson, et deux parois latérales munies chacune d'un bord libre contigu à l'ouverture frontale et d'une découpe qui est transversale sur ladite paroi latérale et qui débouche sur ledit bord libre. Chacune des découpes est apte à recevoir un élément de préhension du récipient de cuisson de manière à conserver l'accès manuel à chaque élément de préhension dudit récipient de cuisson par lesdites parois latérales au cours de l'insertion du récipient de cuisson dans ledit logement ou du retrait du récipient de cuisson dudit logement et est apte à permettre le passage des éléments de préhension du récipient de cuisson en les laissant dépasser à l'extérieur des parois latérales lorsque ledit récipient de cuisson est inséré dans le logement.

Cependant, la modularité de cet appareil de cuisson est limitée à une utilisation avec ce récipient de cuisson dédié.

### Exposé de l'invention

L'invention pallie les divers inconvénients précités existant avec les appareils de cuisson à air chaud traditionnels et apporte de nombreux avantages qui seront exposés ci-après.

A cet effet, selon l'invention, l'appareil de cuisson à air chaud comprend un bloc de chauffe agencé en partie supérieure et une embase agencée en partie inférieure, l'embase comprenant un logement au-dessus duquel se situe le bloc de chauffe. Le logement est apte à recevoir un récipient de cuisson muni d'une ouverture supérieure destinée à être disposée en regard dudit bloc de chauffe. En outre, l'embase comprend une ouverture frontale qui communique avec le logement et qui est apte à autoriser le passage du récipient de cuisson pour son insertion dans le logement et son retrait de celui-ci. Par ailleurs, l'embase comprend deux parois latérales munies chacune d'un bord libre contigu à l'ouverture frontale et d'une découpe qui est transversale sur ladite paroi latérale et qui débouche sur ledit bord libre. Chacune des découpes est apte à recevoir un élément de préhension du récipient de cuisson de manière à conserver l'accès manuel à chaque élément de préhension dudit récipient de cuisson par lesdites parois latérales au cours de l'insertion du récipient de cuisson dans ledit logement ou du retrait du récipient de cuisson dudit logement et est apte à permettre le passage des éléments de préhension du récipient de cuisson en les laissant dépasser à l'extérieur des parois latérales lorsque ledit récipient de cuisson est inséré dans le logement.

Enfin, toujours selon l'invention, le bloc de chauffe est monté sur l'embase de manière amovible, ledit bloc de chauffe étant apte à être placé directement sur une ouverture supérieure d'un récipient de cuisson indépendamment de ladite embase.

Ainsi, la conception de l'appareil de cuisson à air chaud selon l'invention permet de placer directement les aliments à cuire dans un récipient de cuisson qui est utilisé non seulement sur l'appareil de cuisson pour réaliser ladite cuisson au moyen de l'air chaud circulant dans ledit récipient de cuisson grâce au bloc de chauffe, mais aussi pour réaliser directement le service à table sans nécessiter de transvider les aliments cuits dans un plat de service additionnel. D'une part, cela permet de réduire la quantité de vaisselle à laver. D'autre part, l'absence de transfert des aliments cuits dans un plat de service et l'utilisation directe du récipient de cuisson qui vient d'être utilisé pour la cuisson et dont la paroi est encore chaude, permettent de conserver les aliments cuits bien chauds jusqu'à leur service dans les assiettes. Par ailleurs, la présence permanente de cette ouverture frontale sur l'embase permet de réduire la quantité de matière nécessaire pour la conception de l'appareil de cuisson, ce qui réduit son coût total de fabrication.

De plus, les éléments de préhension du récipient de cuisson peuvent être maintenus correctement depuis l'extérieur de l'embase, durant toute la manipulation dudit récipient de cuisson.

Ce montage amovible est mis en œuvre grâce à la présence d'un dispositif d'assemblage entre le bloc de chauffe et l'embase. Ainsi, le bloc de chauffe peut être retiré de l'embase et placé sur un récipient de cuisson qui est disposé directement sur un plan de table ou de cuisine. Ce récipient de cuisson peut comporter deux éléments de préhension et être apte à être placé dans le logement de l'embase de l'appareil de cuisson, tel que précité. Ce récipient de cuisson peut au contraire être d'une conception quelconque, c'est-à-dire non adapté audit logement, mais être apte à recevoir le bloc de chauffe ; il peut par exemple s'agir d'une casserole ou d'un faitout.

L'appareil de cuisson selon l'invention peut être commercialisé indépendamment, le cuisinier pouvant utiliser dans ce cas un ou des récipients dont il dispose déjà et qui sont adaptés pour être placés chacun dans le logement de l'embase en positionnant les deux éléments de préhension dudit récipient dans les découpes des parois latérales de cette embase, voire pour recevoir directement le bloc de chauffe lorsque celui-ci est amovible de l'embase tel que dans la variante précitée de l'appareil de cuisson.

Selon une réalisation de l'invention, les découpes sont aptes à supporter les éléments de préhension du récipient de cuisson lorsque ledit récipient de cuisson est inséré dans le logement. Cela permet d'utiliser des récipients de hauteurs différentes avec l'appareil de cuisson. On pourrait toutefois prévoir en variante un socle sur l'embase, ledit socle supportant le récipient de cuisson tandis que les éléments de préhension sont simplement glissés dans les découpes sur les parois latérales de l'embase. Cette variante conditionne toutefois la hauteur du récipient qui doit être adaptée pour pouvoir glisser les éléments de préhension dans les découpes lorsque le récipient repose sur le socle.

Selon une réalisation de l'invention, l'embase comprend un socle agencé sous l'ouverture frontale et le logement. En outre, le socle comprend un système de guidage apte à aligner en hauteur les éléments de préhension du récipient de cuisson avec les découpes en début d'insertion du récipient de cuisson par l'ouverture frontale. Cela facilite l'introduction du récipient dans le logement en positionnant correctement les éléments de préhension du récipient vis-à-vis des découpes sur les parois latérales, de manière intuitive. Selon une réalisation, ce système de guidage comprend au moins une rampe de guidage, de préférence trois rampes de guidage.

Selon une réalisation de l'invention, l'appareil de cuisson à air chaud comprend un système d'élévation mis en œuvre sur un socle de l'embase ou sur les découpes des parois latérales de l'embase et apte à rehausser le récipient de cuisson lors de son insertion dans le logement de sorte à rapprocher l'ouverture supérieure du récipient de cuisson du bloc de chauffe.

Selon un mode de réalisation de l'invention, l'appareil de cuisson à air chaud comprend un dispositif de sécurité apte à empêcher l'insertion d'un récipient de cuisson dans le logement ou le retrait d'un récipient de cuisson du logement. Selon une réalisation de l'invention, les parois latérales de l'embase comprennent chacune sur leur face interne au moins un élément de support apte à recevoir un élément d'appui d'un ustensile de cuisson en maintenant ledit ustensile de cuisson écarté du bloc de chauffe. Ainsi, selon cette réalisation, l'appareil de cuisson est conçu pour recevoir avant tout un récipient de cuisson, mais aussi un ou plusieurs autres ustensiles de cuisson, comme cela apparaitra ci-après. De préférence, selon cette réalisation, les faces internes des parois latérales comprennent chacune au moins deux éléments de support agencés à des hauteurs différentes sur chacune desdites faces internes, lesdits éléments de support étant aptes à recevoir l'un ou l'autre un élément d'appui d'un ustensile de cuisson en le maintenant écarté du bloc de chauffe selon au moins deux hauteurs différentes. Ainsi, l'appareil de cuisson comprend au moins deux positions d'écartement de l'ustensile de cuisson par rapport au bloc de chauffe, lors de son positionnement dans le logement.

Toutefois, l'invention concerne également un système de cuisson qui comprend un appareil de cuisson à air chaud présentant l'une et/ou l'autre des caractéristiques précitées faisant l'objet de l'invention. En outre, le système de cuisson comprend un kit d'accessoires de cuisson comprenant au moins un récipient de cuisson muni d'une ouverture supérieure et de deux éléments de préhension, ledit au moins un récipient de cuisson étant apte à s'insérer dans le logement de l'embase de l'appareil de cuisson à air chaud en passant par l'ouverture frontale et en plaçant les deux éléments de préhension respectivement dans les deux découpes sur les parois latérales de l'embase dudit appareil de cuisson.

Selon une réalisation du système de cuisson, un système d'étanchéité est mis en œuvre entre l'ouverture supérieure de l'au moins un récipient de cuisson et le bloc de chauffe lorsque ledit au moins un récipient de cuisson est inséré dans le logement. La présence de ce système d'étanchéité permet d'assurer une circulation de l'air chaud dans le récipient grâce au bloc de chauffe, en évitant l'échappement de cet air chaud au niveau de la jonction entre l'ouverture supérieure du récipient et le bloc de chauffe. On peut toutefois envisager des variantes sans système d'étanchéité, l'ouverture supérieure du récipient étant dans ce cas placée à proximité du bloc de chauffe pour concentrer la circulation de l'air chaud dans le récipient en limitant les fuites d'air chaud par l'espacement laissé entre l'ouverture supérieure du récipient et le bloc de chauffe. De préférence, ce système d'étanchéité précité comprend un joint d'étanchéité agencé sur un bord de l'ouverture supérieure de l'au moins un récipient de cuisson ou sur un bord d'une ouverture inférieure du bloc de chauffe.

Selon une réalisation du système de cuisson, les éléments de préhension sur l'au moins un récipient de cuisson sont plats et les découpes sur les parois latérales de l'embase de l'appareil de cuisson présentent la forme d'une fente. On pourrait toutefois envisager des variantes avec des éléments de préhension plus épais et des découpes adaptées à l'épaisseur et/ou à la forme de ces éléments de préhension.

Selon une réalisation du système de cuisson, l'au moins un récipient de cuisson est transparent. Cela permet une visualisation des aliments durant leur cuisson dans le récipient de cuisson, notamment pour surveiller ladite cuisson des aliments. On peut toutefois envisager un récipient de cuisson opaque.

Selon une réalisation du système de cuisson, le kit d'accessoires de cuisson comprend au moins un couvercle apte à être placé sur l'ouverture supérieure de l'au moins un récipient de cuisson. Par exemple, le kit d'accessoires peut soit comprendre autant de couvercles que de récipients de cuisson, les couvercles étant adaptés aux récipients de cuisson, soit comprendre un seul couvercle adapté à tous les récipients de cuisson. Un tel couvercle permet de maintenir les aliments au chaud une fois cuits et le récipient de cuisson placé sur la table, dans l'attente du service dans les assiettes.

Selon une réalisation du système de cuisson, l'appareil de cuisson à air chaud comprend les caractéristiques précitées consistant à prévoir sur chacune des faces internes des parois latérales de l'embase au moins un élément de support. En outre, le kit d'accessoires de cuisson comprend au moins un ustensile de cuisson complémentaire à l'au moins un récipient de cuisson, chaque ustensile de cuisson comprenant deux éléments d'appui aptes à reposer sur les au moins un élément de support des faces internes des deux parois latérales de l'embase, de sorte à maintenir ledit ustensile de cuisson dans le logement de l'embase avec un écartement par rapport au bloc de chauffe. Ainsi, les fonctions de cuisson de l'appareil de cuisson peuvent être étendues, en comparaison des appareils de cuisson traditionnels. De préférence, l'au moins un ustensile de cuisson est choisi parmi une grille, une plaque et un moule rigide plat muni d'empreintes. D'autres ustensiles de cuisson pourraient toutefois être envisagés dans le cadre de l'invention.

### Brève description des figures

Les caractéristiques et avantages de l'invention apparaîtront à la lecture de la description suivante s'appuyant sur des figures, parmi lesquelles :
[Fig. 1] La figure 1 illustre une vue d'ensemble d'un appareil de cuisson dans le logement de l'embase duquel est placé un récipient de cuisson ;
[Fig. 2] La figure 2 illustre un récipient de cuisson apte à venir se placer dans le logement de l'embase de l'appareil de cuisson ;
[Fig. 3] La figure 3 illustre la présence d'un joint d'étanchéité sur le bord de l'ouverture supérieure d'un récipient de cuisson ;
[Fig. 4] La figure 4 illustre une vue d'ensemble d'un appareil de cuisson sans récipient de cuisson ;
[Fig. 5] La figure 5 illustre un ustensile de cuisson du type grille ;
[Fig. 6] La figure 6 illustre un bloc de chauffe isolé, correspondant à une variante de l'appareil de cuisson pour laquelle ledit bloc de chauffe est amovible de l'embase ;
[Fig. 7] La figure 7 illustre le bloc de chauffe de la figure 6 rapporté directement sur un récipient de cuisson.

### Description détaillée de l'invention

Dans la suite de la description, le terme appareil est utilisé pour désigner un appareil 1 de cuisson à air chaud selon l'invention. De même, le terme récipient est utilisé pour désigner le récipient de cuisson selon l'invention. En outre, les mêmes références sont utilisées pour désigner les caractéristiques identiques ou équivalentes selon les diverses variantes de réalisation de l'appareil et du récipient.

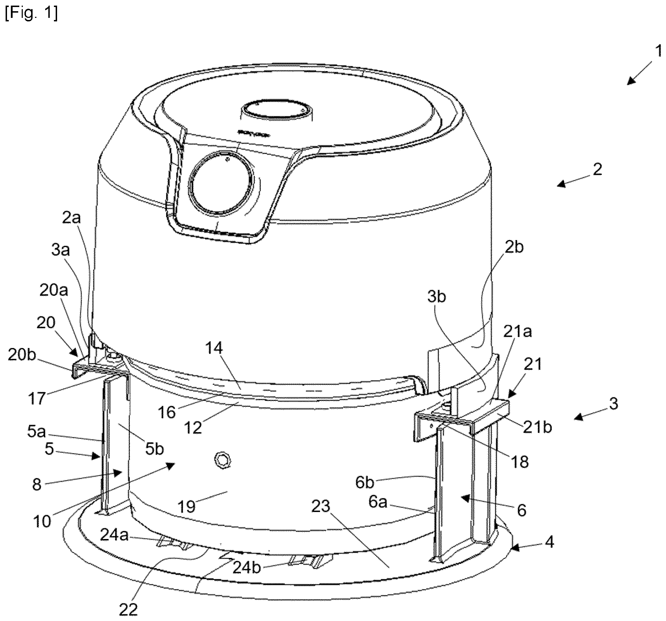

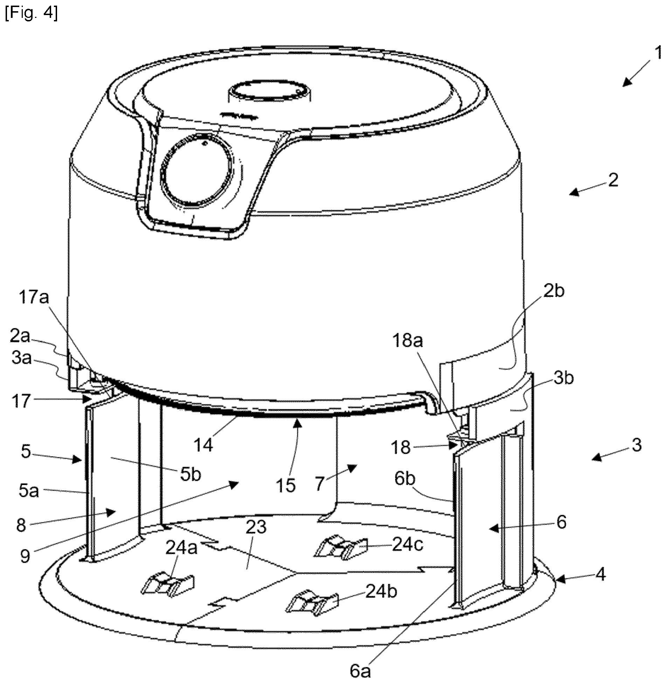

En regard des figures 1 et 4, l'appareil 1 comprend dans sa partie supérieure un bloc de chauffe 2 et dans sa partie inférieure une embase 3. L'embase 3 comprend un socle 4, deux parois latérales 5, 6, une paroi de fond 7 et une ouverture frontale 8. Les parois latérales 5, 6 comprennent chacune un bord libre 5a,6a, lesdits bords libres 5a, 6a étant contigus à l'ouverture frontale 8. Ainsi, l'embase 3 définit un logement 9 situé en-dessous du bloc de chauffe 2. Ce logement 9 permet la réception d'un récipient 10, comme cela sera détaillé ensuite.

Le bloc de chauffe 2 permet de faire circuler de l'air chaud vers le bas en direction du logement 9 de sorte que lorsque le récipient 10 est placé dans ledit logement 9, ledit air chaud circule dans ledit récipient 10. Le bloc de chauffe 2 est conçu pour faire circuler en cycle cet air chaud de sorte à le réchauffer et le renvoyer dans ledit récipient 10 disposé sous ledit bloc de chauffe 2. Ce bloc de chauffe 2 comprend une entrée d'air, un dispositif de chauffe de l'air du type résistif (non illustré) et un dispositif de circulation d'air chaud du type ventilateur (non illustré), comme cela existe déjà traditionnellement sur les appareils de cuisson à air chaud du type friteuse à air chaud.

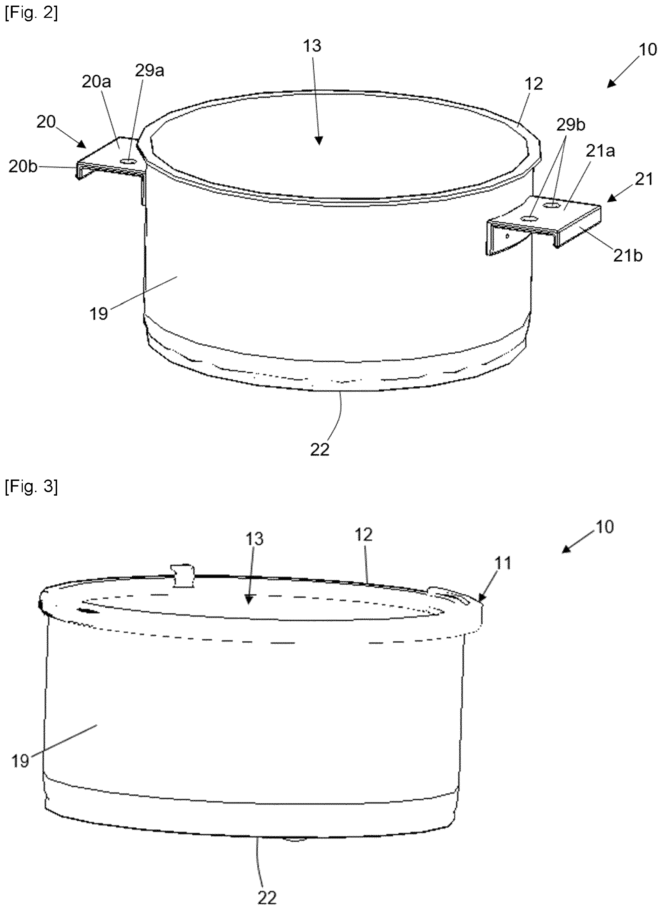

A la différence des appareils de cuisson traditionnels qui prévoient de placer une cuve et éventuellement un panier dans une enceinte de cuisson fermée, l'appareil 1 selon l'invention prévoit préférentiellement d'assurer une étanchéité entre le bloc de chauffe 2 et le récipient 10 lorsque celui-ci est placé dans le logement 9 sur l'embase 3, de sorte à éviter que l'air chaud circulant dans le récipient 10 ne s'échappe par le haut dudit récipient 10. Pour cela un joint d'étanchéité 11 peut être placé sur le bord 12 de l'ouverture supérieure 13 du récipient 10, comme l'illustre la figure 3 (le joint d'étanchéité 11 est représenté partiellement sur le bord 12), ce joint d'étanchéité 11 étant agencé pour coopérer avec le bord 14 d'une ouverture inférieure 15 sur le bloc de chauffe 2. On peut aussi envisager de placer ce joint d'étanchéité 11 sur le bord 14 de l'ouverture inférieure 15 du bloc de chauffe 2 plutôt que sur le bord 12 de l'ouverture supérieure 13 du récipient 10, en particulier lorsque plusieurs récipients 10 présentant des contenances différentes et/ou conçus dans des matières différentes (inox, verre transparent ou opaque, aluminium ...) sont utilisables avec ledit appareil 1. Ce joint d'étanchéité 11 sera de préférence amovible pour faciliter le nettoyage, voire pour le positionner sur l'un ou l'autre des récipients 10 utilisables avec ledit appareil 1, lorsque lesdits récipients 10 sont conçus pour recevoir un tel joint d'étanchéité 11.

Des variantes sont aussi envisageables sans étanchéité entre le récipient 10 et le bloc de chauffe 2 de l'appareil 1, en conservant un léger écart 16 entre le bord 12 de l'ouverture supérieure 13 du récipient 10 et le bord 14 de l'ouverture inférieure 15 du bloc de chauffe 2, comme l'illustre la figure 1. Dans ce cas, l'air chaud circulant dans le récipient 10 sous l'action du bloc de chauffe 2 pourra s'échapper en partie par ledit écart 16 laissé entre lesdits bords 12, 14.

Comme illustré sur les figures 1, 2 et 4, les parois latérales 5, 6 de l'embase 3 comprennent chacune une découpe 17, 18. Les deux découpes 17, 18 sont agencées transversalement sur les parois latérales 5, 6 et débouchent sur les bords libres 5a, 6a desdites parois latérales 5, 6. Le récipient 10 comprend sur son contour 19 deux éléments de préhension 20, 21 disposés en opposition (non illustrés sur la figure 3) et comprenant chacun une partie plate 20a, 21a s'étendant en équerre par rapport au contour 19 et une partie recourbée 20b, 21b disposée en équerre vers le bas par rapport à ladite partie plate 20a, 21a, de sorte à assurer une prise correcte des éléments de préhension 20, 21 sans risque qu'ils glissent des mains durant la manipulation du récipient 10. Les découpes 17, 18 présentent préférentiellement la forme d'une fente dont la largeur est légèrement supérieure à l'épaisseur des parties plates 20a, 21a des éléments de préhension 20, 21, ce qui permet d'introduire ces parties plates 20a, 21a dans les découpes 17, 18 lors de l'insertion du récipient 10 dans le logement 9, ladite insertion se faisant en déplaçant le récipient 10 au travers de l'ouverture frontale 8. Les découpes 17, 18 sont préférentiellement légèrement évasées au niveau des bords libres 5a, 6a des parois latérales 5, 6 de sorte à faciliter l'introduction des parties plates 20a, 21a des éléments de préhension 20, 21 dans lesdites découpes 17, 18. Une fois le récipient 10 en position dans le logement 9, sous le bloc de chauffe 2, les portions d'extrémités des parties plates 20a, 21a et les parties recourbées 20b, 21b dépassent des découpes 17, 18 et sont accessibles par l'extérieur des parois latérales 5, 6, ce qui permet de saisir correctement les éléments de préhension 20, 21 durant l'insertion du récipient 10 dans le logement 9 et son retrait de celui-ci. Bien entendu, le diamètre du contour 19 et/ou la longueur des parties plates 20a, 21a des éléments de préhension 20, 21 sur le récipient 10 sont adaptés en fonction du logement 9 et de l'écartement entre les deux parois latérales 5, 6 sur l'embase 3.

Les parties plates 20a, 21a des éléments de préhension 20, 21 peuvent venir en appui sur les faces inférieures 17a, 18a des découpes 17, 18 de sorte que lesdits éléments de préhension 20, 21 soient supportés par les parois latérales 5, 6 une fois le récipient 10 inséré dans le logement 9. Cela permet de positionner dans le logement 9 des récipients 10 présentant des contenances différentes, c'est-à-dire avec des hauteurs différentes de contour 19, tout en conservant un écart 16 identique entre le bord 12 de l'ouverture supérieure 13 du récipient 10 et le bord 14 de l'ouverture inférieure 15 du bloc de chauffe 2. Dans ce cas, seule varie la position du fond 22 du récipient 10 vis-à-vis de la face supérieure 23 du socle 4 de l'embase 3, ledit fond 22 étant plus ou moins écarté de ladite face supérieure 23 en fonction de la hauteur du contour 19 du récipient 10 lorsque les éléments de préhension 20, 21 reposent sur les faces inférieures 17a, 18a des découpes 17, 18.

Comme illustré sur les figures 1 et 4, le socle 4 de l'embase 3 peut également comporter sur sa face supérieure 23 un système de guidage, de préférence trois rampes de guidage 24a, 24b, 24c réparties en triangle, deux de ces rampes de guidage 24a, 24b étant disposées vers l'avant au niveau de l'ouverture frontale 8 et la troisième rampe de guidage 24c étant disposée à proximité de la paroi de fond 7, comme le montre la figure 4. Ces rampes de guidage 24a, 24b, 24c trouvent particulièrement leur utilisation avec un récipient 10 occupant tout le volume du logement 9, comme sur la figure 1. En effet, dans ce cas, durant l'insertion du récipient 10 dans le logement 9, le fond 22 du récipient 10 prend d'abord appui sur les deux premières rampes de guidage 24a, 24b puis également sur la troisième rampe de guidage 24c, ce qui permet de positionner correctement les parties plates 20a, 21a des éléments de préhension 20, 21 en regard des découpes 17, 18 et évite ainsi que lesdites parties plates 20a, 21a ne viennent buter contre les bords libres 5a, 6a des parois latérales 5, 6 au moment de l'insertion du récipient 10 dans le logement 9. Dans cette variante de l'appareil 1 avec des rampes de guidage 24a, 24b, 24c et avec un récipient 10 de grande taille occupant tout le volume du logement 9, les faces inférieures 17a, 18a des découpes 17, 18 ne participent pas au support du récipient 10, le fond 22 reposant directement sur lesdites rampes de guidage 24a,24b, 24c. Ces rampes de guidage 24a, 24b, 24c pourront être dimensionnées en hauteur de sorte à permettre une élévation (un rehaussement) du récipient 10 dans le logement 9 et, ainsi, réduire l'écart 16 entre le bord 12 de l'ouverture supérieure 13 du récipient 10 et le bord 14 de l'ouverture inférieure 15 du bloc de chauffe 2 et, lorsque le joint d'étanchéité 11 évoqué précédemment est présent sur l'appareil 1, mettre en place l'étanchéité entre ledit récipient 10 et ledit bloc de chauffe 2 par l'intermédiaire dudit joint d'étanchéité 11. Bien entendu, la présence de telles rampes de guidage 24a, 24b, 24c n'exclut pas l'utilisation de récipients 10 présentant des hauteurs de contour 19 plus faibles, auquel cas les faces inférieures 17a, 18a des découpes 17, 18 assureront le support des éléments de préhensions 20, 21 de tels récipients 10 de plus faibles contenances.

D'autres caractéristiques sont envisageables sur l'appareil 1 afin d'élever le récipient 10 dans le logement 9 de l'embase 3, indépendamment de la hauteur du contour 19 du récipient 10 qui est utilisé. En effet, il est possible de prévoir des rampes d'élévation (non illustrées) inclinées vers le haut directement sur les faces inférieures 17a, 18a des découpes 17, 18, les parties plates 20a, 21a des éléments de préhension 20, 21 prenant appui sur ces rampes durant l'insertion du récipient 10 dans le logement 9, permettant ainsi de rehausser ledit récipient 10.

Des caractéristiques additionnelles sont envisageables sur l'appareil 1 afin d'empêcher le retrait du récipient 10 du logement 9. En effet, l'appareil 1 peut par exemple comprendre un dispositif de sécurité (non illustré) permettant de bloquer les éléments de préhension 20, 21 en position dans les découpes 17, 18. Ce dispositif de sécurité peut par exemple comporter deux pièces de blocage qui sont articulées sur les parois latérales 5, 6 pour être déplacées directement à la main ou indirectement en actionnant des organes de manœuvre agissant respectivement sur lesdites pièces de blocage, dans une première position où les pièces de blocage sont dégagées des découpes 17, 18 pour permettre aux éléments de préhension 20, 21 de traverser les découpes et dans une seconde position où lesdites pièces de blocage ferment les découpes 17, 18 au niveau des bords libres 5a, 6a des parois latérales 5, 6 pour empêcher l'extraction des éléments de préhension 20, 21 desdites découpes 17, 18.

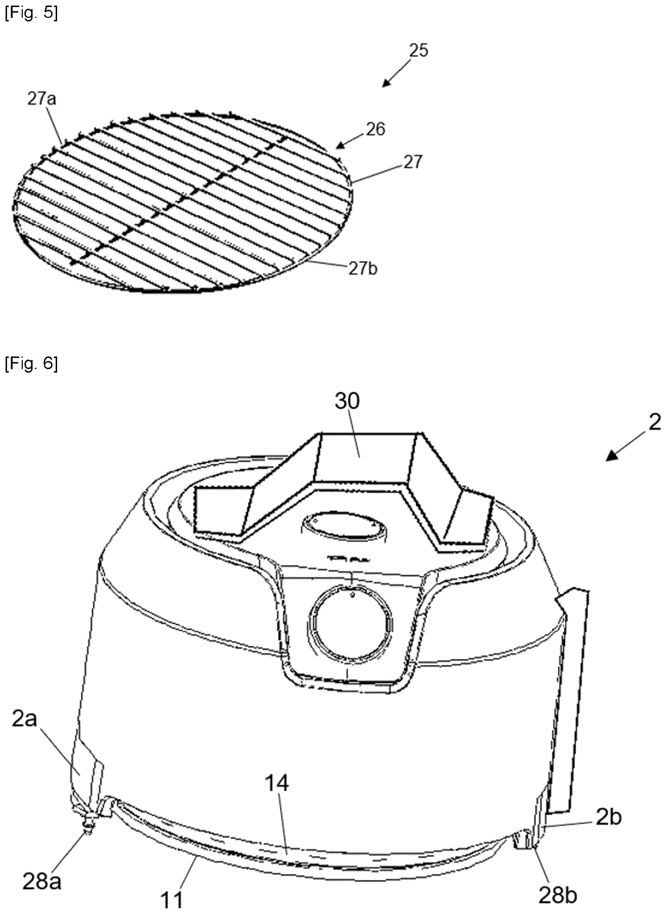

Des caractéristiques additionnelles sont envisageables sur l'appareil 1 afin de permettre son utilisation avec un ustensile de cuisson 25 disposé en lieu et place du récipient 10 dans le logement 9. Par exemple, cet ustensile de cuisson 25 peut être une grille 26, illustrée en figure 5, pour la réalisation de grillade, mais on pourrait envisager une plaque pour la réalisation de quiches ou de pizzas, voire un moule comportant une surface rigide plane sur laquelle sont agencées une ou des empreintes. Un tel ustensile de cuisson 25 sera disposé dans le logement 9 et supporté par les parois latérales 5, 6. Pour cela, les faces internes 5b, 6b des parois latérales 5, 6 comporteront des éléments de support (non illustrés) par exemple sous la forme de nervures transversales sur lesdites parois latérales 5, 6, ledit ustensile de cuisson 25 comprenant sur ses côtés latéraux deux éléments d'appui 27a, 27b qui prennent appui sur ces nervures. Par exemple, deux portions opposées du contour 27 de la grille 26 viendront en appui sur les deux nervures agencées à une même hauteur sur les faces internes 5b, 6b des parois latérales 5, 6. Plusieurs nervures peuvent être agencées transversalement à différentes hauteurs sur chacune des faces internes 5b, 6b des parois latérales 5, 6, par exemple deux ou trois nervures, voire plus, de sorte à permettre le positionnement de l'ustensile de cuisson 25 à différentes hauteurs à l'intérieur du logement 9, afin d'éloigner plus ou moins ledit ustensile de cuisson 25 vis-à-vis de l'ouverture inférieure 15 du bloc de chauffe 2. Le bloc de chauffe 2 sera utilisé différemment selon qu'un récipient 10 ou un ustensile de cuisson 25 est disposé dans le logement 9 de l'embase 3. En effet, le dispositif de chauffe et le dispositif de circulation d'air chaud du bloc de chauffe 2 sont utilisés concomitamment lorsqu'un récipient 10 est placé dans le logement. Tandis qu'avec un ustensile de cuisson 25 utilisé, seul le dispositif de chauffe du bloc de chauffe 2 pourra être utilisé.

L'invention concerne également un système de cuisson qui comprend un appareil 1 présentant les caractéristiques précitées et un kit d'accessoires qui comprend au moins un récipient 10. De préférence, le kit d'accessoires comprendra plusieurs récipients 10 qui pourront avoir des hauteurs de contour 19 différentes et/ou être conçus dans des matériaux différents, par exemple en verre transparent, en verre opaque, en inox, en aluminium voire d'autres matériaux avec un revêtement adapté pour la cuisson d'aliments. Le kit d'accessoires pourra aussi comporter un ou plusieurs couvercles adaptés aux divers récipients de sorte à couvrir le récipient 10 une fois celui-ci extrait du logement 9 et de pouvoir conserver la chaleur dans ledit récipient 10 contenant les aliments cuits. Ce kit d'accessoires pourra aussi comporter des ustensiles de cuisson 25 tels que présentés précédemment, dans une version adaptée de l'appareil 1.

D'autres variantes sont envisageables dans le cadre de l'invention. Par exemple, les éléments de préhension 20, 21 pourront être d'une forme différente et les découpes 17, 18 sur les parois latérales 5, 6 pourront avoir une forme différente de celle d'une fente de sorte à les adapter auxdits éléments de préhension 20, 21.

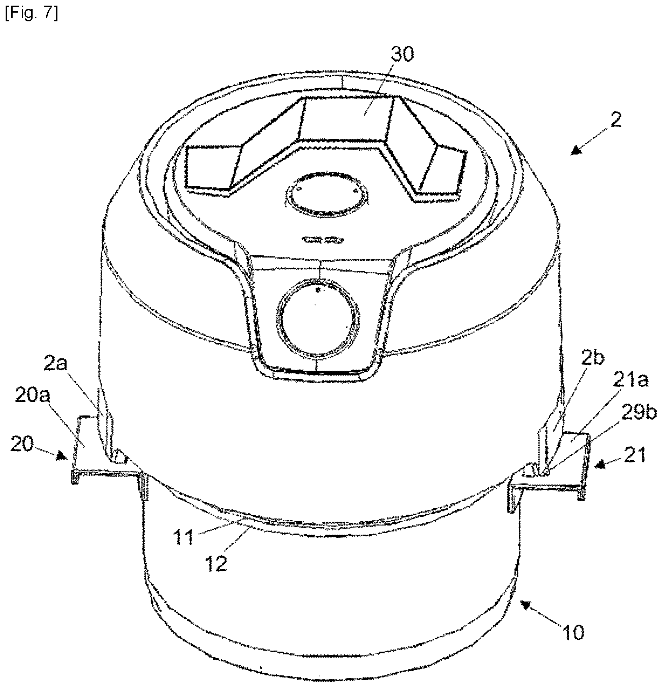

Dans l'appareil 1 apparaissant dans les figures 6 et 7, le bloc de chauffe 2 est amovible de l'embase 3 de manière à pouvoir dégager ledit bloc de chauffe 2 de ladite embase 3 et venir le placer sur un récipient 10 adapté. Pour cela, un dispositif d'assemblage est agencé entre le bloc de chauffe 2 et l'embase 3. Ce dispositif d'assemblage peut être mis en œuvre entre deux portions latérales inférieures 2a, 2b du bloc de chauffe 2 et deux portions latérales supérieures 3a, 3b de l'embase 3, comme référencé sur les figures 1 et 4. De préférence, ce dispositif d'assemblage comprend des plots 28a, 28b s'étendant vers le bas en-dessous des portions latérales inférieures 2a, 2b du bloc de chauffe 2, ces plots 28a, 28b s'engageant dans des logements (non illustrés) correspondants agencés sur les portions latérales supérieures 3a, 3b de l'embase 3, lorsque ledit bloc de chauffe 2 est placé sur ladite embase 3. Un mécanisme de verrouillage (non illustré) peut être prévu pour bloquer les plots 28a, 28b dans lesdits logements (non illustrés), ce mécanisme de verrouillage pouvant être activé et désactivé au moyen d'un organe de manœuvre (non illustré). Dans cette variante de l'appareil 1, le joint d'étanchéité 11 sera préférentiellement mis en œuvre sur le bord 14 de l'ouverture inférieure 15 du bloc de chauffe 2 plutôt que sur le bord 12 de l'ouverture supérieure 13 du récipient 10. En regard des figures 2, 6 et 7, les parties plates 20a, 21a des deux éléments de préhension 20, 21 du récipient 10 peuvent comporter des orifices 29a, 29b permettant la réception des plots 28a, 28b lorsque le bloc de chauffe 2 est placé sur le récipient 10 avec ses portions latérales inférieures 2a, 2b positionnées en correspondance avec lesdits éléments de préhension 20, 21. Dans cette version de l'appareil 1, le bloc de chauffe 2 comportera sur le dessus une poignée de préhension 30 afin de faciliter sa manipulation. En outre, le bloc de chauffe 2 pourra être placé sur d'autres types de récipient de cuisson, par exemple une casserole ou un faitout, le kit d'accessoires pouvant comporter de tels récipients en complément du récipient 10. Ces récipients de cuisson de type casserole et faitout permettront la réception du bloc de chauffe 2 sans pour autant être adaptés pour être placés dans le logement 9 de l'embase 3. L'utilisateur pourrait aussi placer ce bloc de chauffe 2 sur d'autres casseroles ou faitouts dont il dispose déjà dans sa cuisine et qui sont adaptés pour recevoir ledit bloc de chauffe 2.

## Revendications

1. Appareil (1) de cuisson à air chaud, lequel comprend un bloc de chauffe (2) agencé en partie supérieure et une embase (3) agencée en partie inférieure et comprenant un logement (9) au-dessus duquel se situe le bloc de chauffe (2), ledit logement (9) étant apte à recevoir un récipient (10) de cuisson muni d'une ouverture supérieure (13) destinée à être disposée en regard dudit bloc de chauffe (2), l'embase (3) comprenant une ouverture frontale (8) communiquant avec le logement (9) et apte à autoriser le passage du récipient (10) de cuisson pour son insertion dans ledit logement (9) et son retrait de celui-ci, ladite embase (3) comprenant en outre deux parois latérales (5, 6) munies chacune d'un bord libre (5a, 6a) contigu à l'ouverture frontale (8), **caractérisé en ce que** lesdites deux parois latérales sont également munies d'une découpe (17, 18) transversale sur ladite paroi latérale (5, 6) et débouchant sur ledit bord libre (5a, 6a), chacune des découpes (17, 18) étant apte à recevoir un élément de préhension (20, 21) du récipient (10) de cuisson de manière à conserver l'accès manuel à chaque élément de préhension (20, 21) dudit récipient (10) de cuisson par lesdites parois latérales (5, 6) au cours de l'insertion du récipient de cuisson dans ledit logement (9) ou du retrait du récipient (10) de cuisson dudit logement (9) et apte à permettre le passage des éléments de préhension (20, 21) du récipient (10) de cuisson en les laissant dépasser à l'extérieur des parois latérales (5, 6) lorsque ledit récipient (10) de cuisson est inséré dans le logement (9), et **en ce que** le bloc de chauffe (2) est monté sur l'embase (3) de manière amovible, ledit bloc de chauffe étant apte à être placé directement sur une ouverture supérieure (13) d'un récipient (10) de cuisson indépendamment de ladite embase (3).

2. Appareil (1) de cuisson à air chaud selon la revendication 1, dans lequel les découpes (17, 18) sont aptes à supporter les éléments de préhension (20, 21) du récipient (10) de cuisson lorsque ledit récipient (10) de cuisson est inséré dans le logement (9).

3. Appareil (1) de cuisson à air chaud selon l'une des revendications 1 ou 2, dans lequel l'embase (3) comprend un socle (4) agencé sous l'ouverture frontale (8) et le logement (9), le socle comprenant un système de guidage apte à aligner en hauteur les éléments de préhension (20, 21) du récipient (10) de cuisson avec les découpes (17, 18) en début d'insertion du récipient (10) de cuisson par l'ouverture frontale (8).

4. Appareil (1) de cuisson à air chaud selon la revendication 3, dans lequel le système de guidage comprend au moins une rampe de guidage, de préférence trois rampes de guidage (24a, 24b, 24c).

5. Appareil (1) de cuisson à air chaud selon l'une quelconque des revendications 1 à 4, lequel comprend un système d'élévation mis en œuvre sur un socle de l'embase ou sur les découpes des parois latérales de l'embase et apte à rehausser le récipient (10) de cuisson lors de son insertion dans le logement (9) de sorte à rapprocher l'ouverture supérieure (13) du récipient (10) de cuisson du bloc de chauffe (2).

6. Appareil (1) de cuisson à air chaud, selon l'une quelconque des revendications 1 à 5, lequel comprend un dispositif de sécurité apte à empêcher l'insertion d'un récipient de cuisson dans le logement ou le retrait d'un récipient (10) de cuisson du logement (9).

7. Appareil (1) de cuisson à air chaud selon l'une quelconque des revendications 1 à 6, dans lequel les parois latérales (5, 6) de l'embase (3) comprennent chacune sur leur face interne (5b, 6b) au moins un élément de support apte à recevoir un élément d'appui (27a, 27b) d'un ustensile de cuisson (25) en maintenant ledit ustensile de cuisson (25) écarté du bloc de chauffe (2).

8. Appareil (1) de cuisson à air chaud selon la revendication 7, dans lequel les faces internes (5b, 6b) des parois latérales (5, 6) comprennent chacune au moins deux éléments de support agencés à des hauteurs différentes sur chacune desdites faces internes (5b, 6b), lesdits éléments de support étant aptes à recevoir l'un ou l'autre un élément d'appui (27a, 27b) d'un ustensile de cuisson (25) en le maintenant écarté du bloc de chauffe (2) selon au moins deux hauteurs différentes.

9. Système de cuisson comprenant un appareil (1) de cuisson à air chaud présentant les caractéristiques de l'une quelconque des revendications 1 à 8 et un kit d'accessoires de cuisson comprenant au moins un récipient (10) de cuisson muni d'une ouverture supérieure (13) et de deux éléments de préhension (20, 21), ledit au moins un récipient (10) de cuisson étant apte à s'insérer dans le logement (9) de l'embase (3) de l'appareil (1) de cuisson à air chaud en passant par l'ouverture frontale (8) et en plaçant les deux éléments de préhension (20, 21) respectivement dans les deux découpes (17, 18) sur les parois latérales (5, 6) de ladite embase (3).

10. Système de cuisson selon la revendication 9, dans lequel un système d'étanchéité est mis en œuvre entre l'ouverture supérieure (13) de l'au moins un récipient (10) de cuisson et le bloc de chauffe (2) lorsque ledit au moins un récipient (10) de cuisson est inséré dans le logement (9).

11. Système de cuisson selon la revendication 10, dans lequel le système d'étanchéité comprend un joint d'étanchéité (11) agencé sur un bord (12) de l'ouverture supérieure (13) de l'au moins un récipient (10) de cuisson ou sur un bord (14) d'une ouverture inférieure (15) du bloc de chauffe (2).

12. Système de cuisson selon l'une quelconque des revendications 9 à 11, dans lequel les éléments de préhensions (20, 21) sur l'au moins un récipient (10) de cuisson sont plats et les découpes (17, 18) sur les parois latérales (5, 6) de l'embase (3) de l'appareil de cuisson présentent la forme d'une fente.

13. Système de cuisson selon l'une quelconque des revendications 9 à 12, dans lequel l'au moins un récipient (10) de cuisson est transparent.

14. Système de cuisson selon l'une quelconque des revendications 9 à 13, dans lequel le kit d'accessoires de cuisson comprend au moins un couvercle apte à être placé sur l'ouverture supérieure (13) de l'au moins un récipient (10) de cuisson.

15. Système de cuisson selon l'une quelconque des revendications 9 à 14, l'appareil (1) de cuisson à air chaud comprenant les caractéristiques de l'une quelconque des revendications 1 à 8, dans lequel le kit d'accessoires de cuisson comprend au moins un ustensile de cuisson (25) complémentaire à l'au moins un récipient (10) de cuisson, chaque ustensile de cuisson (25) comprenant deux éléments d'appui (27a, 27b) aptes à reposer sur les au moins un élément de support des faces internes (5b, 6b) des deux parois latérales (5, 6) de l'embase (3) de sorte à maintenir ledit ustensile de cuisson (25) dans le logement (9) de l'embase (3) avec un écartement par rapport au bloc de chauffe (2).

16. Système de cuisson selon la revendication 15, dans lequel l'au moins un ustensile de cuisson (25) est choisi parmi une grille (26), une plaque et un moule rigide plat muni d'empreintes.

## Patentansprüche

1. Heißluft-Kochgerät (1), das einen im oberen Teil angeordneten Heizblock (2) und einen im unteren Teil angeordneten Unterteil (3) umfasst und eine Aufnahme (9) umfasst, über der sich der Heizblock (2) befindet, wobei die Aufnahme (9) in der Lage ist, einen Kochbehälter (10) aufzunehmen, das mit einer oberen Öffnung (13) versehen ist, die dazu bestimmt ist, gegenüber dem Heizblock (2) angeordnet zu werden, wobei der Unterteil (3) eine vordere Öffnung (8) umfasst, die mit der Aufnahme (9) in Verbindung steht und in der Lage ist, den Durchgang des Kochbehälters (10) zu dessen Einsetzen in die Aufnahme (9) und dessen Herausnehmen aus dieser zu ermöglichen, wobei der Unterteil (3) weiter zwei Seitenwände (5, 6) umfasst, die jeweils mit einem freien Rand (5a, 6a) versehen sind, der an die vordere Öffnung (8) angrenzt, **dadurch gekennzeichnet, dass** die beiden Seitenwände ebenfalls mit einem Ausschnitt (17, 18) versehen sind, der quer zu der Seitenwand (5, 6) verläuft und in den freien Rand (5a, 6a) mündet, wobei jeder der Ausschnitte (17, 18) in der Lage ist, ein Greifelement (20, 21) des Kochbehälters (10) aufzunehmen, um den manuellen Zugang zu jedem Greifelement (20, 21) des Kochbehälters (10) durch die Seitenwände (5, 6) während des Einsetzens des Kochbehälters in die Aufnahme (9) oder während des Herausnehmens des Kochbehälters (10) aus der Aufnahme (9) aufrechtzuerhalten, und in der Lage ist, den Durchgang der Greifelemente (20, 21) des Kochbehälters (10) zuzulassen, indem sie beim Einsetzen des Kochbehälters (10) in die Aufnahme (9) aus den Seitenwänden (5, 6) herausragen, und dadurch, dass der Heizblock (2) abnehmbar auf dem Unterteil (3) montiert ist, wobei der Heizblock unabhängig vom Unterteil (3) direkt auf eine obere Öffnung (13) eines Kochbehälters (10) platziert werden kann.

2. Heißluft-Kochgerät (1) nach Anspruch 1, wobei die Ausschnitte (17, 18) in der Lage sind, die Greifelemente (20, 21) des Kochbehälters (10) zu stützen, wenn der Kochbehälter (10) in die Aufnahme (9) eingesetzt ist.

3. Heißluft-Kochgerät (1) nach einem der Ansprüche 1 oder 2, wobei das Unterteil (3) einen unter der vorderen Öffnung (8) und der Aufnahme (9) angeordneten Sockel (4) umfasst, wobei der Sockel ein Führungssystem umfasst, das in der Lage ist, die Höhe der Greifelemente (20, 21) des Kochbehälters (10) mit den Ausschnitten (17, 18) zu Beginn des Einsetzens des Kochbehälters (10) durch die vordere Öffnung (8) auszurichten.

4. Heißluft-Kochgerät (1) nach Anspruch 3, wobei das Führungssystem mindestens eine Führungsrampe, bevorzugt drei Führungsrampen (24a, 24b, 24c) umfasst.

5. Heißluft-Kochgerät (1) nach einem der Ansprüche 1 bis 4, das ein Hebesystem umfasst, das auf einem Sockel des Unterteils oder auf den Ausschnitten in den Seitenwänden des Unterteils ausgeführt ist und in der Lage ist, den Kochbehälter (10) während dessen Einsetzens in die Aufnahme (9) anzuheben, um die obere Öffnung (13) des Kochbehälters (10) näher an den Heizblock (2) zu bringen.

6. Heißluft-Kochgerät (1) nach einem der Ansprüche 1 bis 5, das eine Sicherheitsvorrichtung umfasst, die in der Lage ist, das Einsetzen eines Kochbehälters in die Aufnahme oder das Herausnehmen eines Kochbehälters (10) aus der Aufnahme (9) zu verhindern.

7. Heißluft-Kochgerät (1) nach einem der Ansprüche 1 bis 6, wobei die Seitenwände (5, 6) des Unterteils (3) auf ihrer Innenseite (5b, 6b) jeweils mindestens ein Stützelement umfassen, das in der Lage ist, ein Auflageelement (27a, 27b) eines Kochutensils (25) aufzunehmen, wobei das Kochgeschirr (25) vom Heizblock (2) beabstandet gehalten wird.

8. Heißluft-Kochgerät (1) nach Anspruch 7, wobei die Innenseiten (5b, 6b) der Seitenwände (5, 6) jeweils mindestens zwei Stützelemente umfassen, die auf unterschiedlichen Höhen auf jeder der Innenseiten (5b, 6b) angeordnet sind, wobei die Stützelemente in der Lage sind, das eine oder andere Auflageelement (27a, 27b) eines Kochutensils (25) aufzunehmen, indem sie es auf mindestens zwei unterschiedlichen Höhen vom Heizblock (2) beabstandet halten.

9. Kochsystem, das ein Heißluft-Kochgerät (1) mit den Merkmalen nach einem der Ansprüche 1 bis 8 und einen Kochzubehörsatz umfasst, der mindestens einen Kochbehälter (10) umfasst, der mit einer oberen Öffnung (13) und zwei Griffelementen (20, 21) versehen ist, wobei der mindestens eine Kochbehälter (10) in der Lage ist, in die Aufnahme (9) des Unterteils (3) des Heißluft-Kochgeräts (1) eingesetzt zu werden, indem es durch die vordere Öffnung (8) hindurchgeführt wird und die beiden Greifelemente (20, 21) jeweils in die beiden Ausschnitte (17, 18) an den Seitenwänden (5, 6) des Unterteils (3) platziert werden.

10. Kochsystem nach Anspruch 9, wobei ein Abdichtungssystem zwischen der oberen Öffnung (13) des mindestens einen Kochbehälters (10) und dem Heizblock (2) ausgeführt ist, wenn der mindestens eine Kochbehälter (10) in die Aufnahme (9) eingesetzt ist.

11. Kochsystem nach Anspruch 10, wobei das Abdichtungssystem eine Dichtungsverbindung (11) umfasst, die an einem Rand (12) der oberen Öffnung (13) des mindestens einen Kochbehälters (10) oder an einem Rand (14) einer unteren Öffnung (15) des Heizblocks (2) angeordnet ist.

12. Kochsystem nach einem der Ansprüche 9 bis 11, wobei die Greifelemente (20, 21) an dem mindestens einen Kochbehälter (10) flach sind und die Ausschnitte (17, 18) an den Seitenwänden (5, 6) des Unterteils (3) des Kochgerätes eine Schlitzform aufweisen.

13. Kochsystem nach einem der Ansprüche 9 bis 12, wobei der mindestens eine Kochbehälter (10) transparent ist.

14. Kochsystem nach einem der Ansprüche 9 bis 13, wobei der Kochzubehörsatz mindestens einen Deckel umfasst, der auf die obere Öffnung (13) des mindestens einen Kochbehälters (10) platziert werden kann.

15. Kochsystem nach einem der Ansprüche 9 bis 14, wobei das Heißluft-Kochgerät (1) die Merkmale nach einem der Ansprüche 1 bis 8 umfasst, wobei der Kochzubehörsatz mindestens ein Kochutensil (25) umfasst, das zu dem mindestens einen Kochbehälter (10) komplementär ist, wobei jedes Kochutensil (25) zwei Auflageelemente (27a, 27b) umfasst, die in der Lage sind, auf dem mindestens einen Stützelement der Innenseiten (5b, 6b) der beiden Seitenwände (5, 6) des Unterteils (3) aufzuliegen, um das Kochutensil (25) in der Aufnahme (9) des Unterteils (3) mit einem Abstand zum Heizblock (2) zu halten.

16. Kochsystem nach Anspruch 15, wobei das mindestens eine Kochutensil (25) aus einem Gitter (26), einer Platte und einer flachen, starren, mit Vertiefungen versehenen Form ausgewählt ist.

## Claims

1. Hot air cooking appliance (1), which comprises a heating block (2) arranged in the upper part and a base (3) arranged in the lower part and comprising a housing (9) above which is located the heating block (2), said housing (9) being capable of receiving a cooking vessel (10) equipped with an upper opening (13) intended to be disposed facing said heating block (2), the base (3) comprising a front opening (8) communicating with the housing (9) and capable of enabling the passage of the cooking vessel (10) for its insertion into said housing (9) and its removal from it, said base (3) further comprising two side walls (5, 6) each equipped with a free edge (5a, 6a) contiguous to the front opening (8), **characterised in that** said two side walls are also equipped with a transverse cutout (17, 18) on said side wall (5, 6) and leading to said free edge (5a, 6a), each of the cutouts (17, 18) being capable of receiving an element for gripping (20, 21) the cooking vessel (10) so as to preserve manual access to each element for gripping (20, 21) said cooking vessel (10) by said side walls (5, 6) during the insertion of the cooking vessel into said housing (9) or of the removal of the cooking vessel (10) from said housing (9) and capable of enabling the passage of the elements for gripping (20, 21) the cooking vessel (10) by letting them exceed outside of the side walls (5, 6) when said cooking vessel (10) is inserted into the housing (9), and **in that** the heating block (2) is removably mounted on the base (3), said heating block being capable of being placed directly on an upper opening (13) of a cooking vessel (10) independently from said base (3).

2. Hot air cooking appliance (1) according to claim 1, wherein the cutouts (17, 18) are capable of supporting the elements for gripping (20, 21) the cooking vessel (10) when said cooking vessel (10) is inserted into the housing (9).

3. Hot air cooking appliance (1) according to one of claims 1 or 2, wherein the base (3) comprises a stand (4) arranged under the front opening (8) and the housing (9), the stand comprising a guiding system capable of aligning at the top the elements for gripping (20, 21) the cooking vessel (10) with the cutouts (17, 18) at the start of inserting the cooking vessel (10) through the front opening (8).

4. Hot air cooking appliance (1) according to claim 3, wherein the guiding system comprises at least one guiding ramp, preferably three guiding ramps (24a, 24b, 24c).

5. Hot air cooking appliance (1) according to any one of claims 1 to 4, which comprises a lifting system implemented on a stand of the base or on the cutouts of the side walls of the base and capable of elevating the cooking vessel (10) during its insertion into the housing (9) so as to bring the upper opening (13) of the cooking vessel (10) close to the heating block (2).

6. Hot air cooking appliance (1) according to any one of claims 1 to 5, which comprises a safety device capable of preventing the insertion of a cooking vessel into the housing or the removal of a cooking vessel (10) from the housing (9).

7. Hot air cooking appliance (1) according to any one of claims 1 to 6, wherein the side walls (5, 6) of the base (3) each comprise on their inner face (5b, 6b) at least one support element capable of receiving a bearing element (27a, 27b) of a cooking utensil (25) by keeping said cooking utensil (25) away from the heating block (2).

8. Hot air cooking appliance (1) according to claim 7, wherein the inner faces (5b, 6b) of the side walls (5, 6) each comprise at least two support elements arranged at different heights on each of said inner faces (5b, 6b), said support elements being capable of receiving either a bearing element (27a, 27b) of a cooking utensil (25) by keeping away from the heating block (2) according to at least two different heights.

9. Cooking system comprising a hot air cooking appliance (1) having the features of any one of claims 1 to 8 and a cooking accessory kit comprising at least one cooking vessel (10) equipped with an upper opening (13) and with two gripping elements (20, 21), said at least one cooking vessel (10) being capable of being inserted into the housing (9) of the base (3) of the hot air cooking appliance (1) by passing through the front opening (8) and by placing the two gripping elements (20, 21) respectively in the two cutouts (17, 18) on the side walls (5, 6) of said base (3).

10. Cooking system according to claim 9, wherein a sealing system is implemented between the upper opening (13) of the at least one cooking vessel (10) and the heating block (2) when said at least one cooking vessel (10) is inserted into the housing (9).

11. Cooking system according to claim 10, wherein the sealing system comprises a seal (11) arranged on an edge (12) of the upper opening (13) of the at least one cooking vessel (10) or on an edge (14) of a lower opening (15) of the heating block (2).

12. Cooking system according to any one of claims 9 to 11, wherein the gripping elements (20, 21) on the at least one cooking vessel (10) are flat and the cutouts (17, 18) on the side walls (5, 6) of the base (3) of the cooking appliance having the form of a slope.

13. Cooking system according to any one of claims 9 to 12, wherein the at least one cooking vessel (10) is transparent.

14. Cooking system according to any one of claims 9 to 13, wherein the cooking accessory kit comprises at least one lid capable of being placed on the upper opening (13) of the at least one cooking vessel (10).

15. Cooking system according to any one of claims 9 to 14, the hot air cooking appliance (1) comprising the features of any one of claims 1 to 8, wherein the cooking accessory kit comprises at least one cooking utensil (25) complementary to the at least one cooking vessel (10), each cooking utensil (25) comprising two bearing elements (27a, 27b) capable of resting on the at least one support element of the inner faces (5b, 6b) of the two side walls (5, 6) of the base (3) so as to keep said cooking utensil (25) in the housing (9) of the base (3) with a gap relative to the heating block (2).

16. Cooking system according to claim 15, wherein the at least one cooking utensil (25) is chosen from among a grille (26), a plate and a flat, rigid mould equipped with indentations.
